# EUROPEAN PATENT APPLICATION

(11) **EP 2 068 037 A1**
(43) Date of publication of application: **10.06.2009**
(21) Application number: 07807652.8
(22) Date of filing: 20.09.2007
(51) Int. Cl.: F16H 1/32, B60G 21/055

(54) **ECCENTRIC OSCILLATING REDUCTION GEAR AND STABILIZER SHAFT ROTATING DEVICE USING ECCENTRIC OSCILLATING REDUCTION GEAR**

(30) Priority: 25.09.2006 JP 2006258361
(71) Applicant: Nabtesco Corporation, Minato-ku, Tokyo 1050022 (JP)
(72) Inventor: WANG, Hongyou, Mie 514-8533 (JP); TANAKA, Satoshi, Mie 514-8533 (JP)
(74) Representative: Grünecker, Kinkeldey, Stockmair & Schwanhäusser Anwaltssozietät
(86) International application number: PCT/JP2007/068300
(87) International publication number: WO 2008/041496

(57) **Abstract**

The present invention reduces the manufacturing cost of an eccentric oscillating type speed reducer 11 while preventing the torque transmitting capability of the eccentric oscillating type speed reducer 11 from being degraded.

A part of a case 12, which is in a meshing region 50 in which internal teeth of the case 12 mesh with external teeth of pinions 20, is enabled to bend in a direction in which the radius of curvature thereof decreases. Thus, even when the concentration of a meshing load on the vicinity of a part, at which the manner of meshing between the internal teeth and the external teeth most differs from an ideal manner in the meshing region 50, a part of the case 12, which is in the vicinity of the part, bends in a direction in which the radius of curvature decreases. Consequently, the meshing load can be uniformized by being dispersed in the circumferential direction of the case 12.

## Description

### Technical Field

The present invention relates to an eccentric oscillating type speed reducer that reduces a speed of an input rotation, and to a rotation apparatus for a stabilizer shaft, which uses the eccentric oscillating type speed reducer.

### Background Art

As a conventional eccentric oscillating type speed reducer, for example, the following speed reducer described in JP-B-5-86506 is known.

This speed reducer has a case provided with internal teeth by impacting substantially half of each of a large number of cylindrical pins into the inner periphery thereof, a carrier inserted into the case so as to be able to perform relative rotation with respect to the case, a pinion supported by the carrier so as to have external teeth formed on the outer periphery thereof to mesh with the internal teeth, and a crank shaft configured to have an eccentric portion inserted into a central portion of the pinion and to rotate to cause the pinion to perform eccentric rotation.

In recent years, such a speed reducer has been required to reduce the manufacturing cost thereof without reducing a transmitted torque. However, in a case where the internal teeth are constructed by impacting the cylindrical pins into the case, as described above, the number of components is increased. In addition, a process of impacting the pins into pin grooves formed in the case is required. Consequently, the manufacturing cost is high. Thus, it is considered to reduce the manufacturing cost by forming the internal teeth integrally with the case, by cutting work, precision casting, or the like, and by using internal and external teeth with low machining accuracy. Also, a heat treatment distortion of tooth portions (the internal teeth, and the external teeth) is eliminated, and the manner of meshing between the internal teeth and the external teeth is improved to an ideal manner by polishing processing on the tooth portions after the tooth portions are hardened by performing heat treatment processing thereon. Also, it is considered to reduce the manufacturing cost of the speed reducer by omitting the polishing processing for eliminating the distortion.

### Disclosure of the Invention

### Problems that the Invention is to Solve

However, in the case of using the aforementioned internal and external teeth with low machining accuracy or the internal and external teeth, which are formed by omitting the polishing processing for eliminating the heat treatment distortion, in the eccentric oscillating type speed reducer, the concentration of a large meshing load on the vicinity of a part, at which the manner of meshing between the internal teeth and the external teeth largely differs from an ideal manner, is caused in a meshing region in which the inner teeth mesh with the external teeth while a torque is transmitted. Consequently, the conventional eccentric oscillating type speed reducer has a problem that the torque transmitting capability of the eccentric oscillating type speed reducer is largely reduced.

An object of the present invention is to provide an eccentric oscillating type speed reducer that can be manufactured at low cost while preventing torque transmitting capability thereof from being degraded, and to provide a rotation apparatus for a stabilizer shaft, which uses this eccentric oscillating type speed reducer.

### Means for Solving the Problems

First, such an object can be achieved by an eccentric oscillating type speed reducer which comprises a case with the inner periphery of which a large number of internal teeth are formed integrally, a carrier capable of performing relative rotation with respect to the case, a pinion supported by the carrier and configured so that external teeth meshing with the internal teeth are formed on an outer periphery thereof, and a crank shaft which has an eccentric portion inserted into the pinion and which rotates to cause the pinion to perform eccentric rotation. In this eccentric oscillating type speed reducer, a part of the case, which is in a meshing region in which the internal teeth mesh with the external teeth, can bend in a direction in which a radius of curvature thereof decreases.

Second, such an object can be achieved by a rotation apparatus for a stabilizer shaft using an eccentric oscillating type speed reducer, which comprises the aforementioned eccentric oscillating type speed reducer, and a drive motor configured to give a torque to a crank shaft of the eccentric oscillating type speed reducer. In this rotation apparatus, a first stabilizer element constituting one side of a stabilizer shaft is fixed to the case of the speed reducer, while a second stabilizer element constituting the remaining one side of the stabilizer shaft is fixed to the carrier of the speed reducer.

### Advantages of the Invention

According to the present invention, a large number of the internal teeth are formed integrally with the inner periphery of the case. A part of the case, which is in a meshing region in which the internal teeth and the external teeth of the pinions mesh with one another, is enabled to bend in a direction which the radius of curvature decreases. Thus, when the concentration of the meshing load on the part, in which the manner of meshing between the internal teeth and the external teeth largely differs from an ideal manner, is caused by the eccentric rotation of the pinion, a portion of the case, which is in the vicinity of this part, bends (consequently, the portion of the case swells radially outwardly) in a direction in which the radius of curvature decreases. Accordingly, the meshing load is uniformized by being dispersed in the circumferential direction of the case. Thus, the manufacturing cost of the eccentric oscillating type speed reducer can be reduced while the torque transmitting capability is restrained from being reduced.

Further, in a case where the eccentric oscillating type speed reducer is used in a limited narrow space, particularly, in a case where the eccentric oscillating type speed reducer is used in the rotation apparatus for the stabilizer shaft, the outside diameter of the eccentric oscillating type speed reducer is a fairly small diameter, the polishing processing of the internal teeth and the external teeth are difficult to perform. However, according to the present invention, a part of the case, which is in the meshing region, can bend in a direction in which the radius of curvature decreases. Thus, upon completion of hardening processing, such as heat treatment processing, of the tooth portions, the meshing load is uniformized by being dispersed in the circumferential direction of the case, even without performing polishing processing on the external teeth. Consequently, the present invention can preferably be used especially, in such a case.

Furthermore, the aforementioned internal teeth are constituted by teeth having a circular arc tooth profile. In addition, the external teeth are constituted by teeth having a trochoidal tooth profile. Thus, the concentration of the meshing load can be mitigated. Also, the eccentric oscillating type speed reducer can be manufactured at low cost. Further, a seal member is interposed between the inner periphery of the case at an axial one side of each pinion and the outer periphery of the carrier. On the other hand, in a case where the bearing is interposed only between a part of the inner periphery of the case, which is provided at the axial other side of the pinion, and the outer periphery of the carrier. The case and the carrier are caused by the bearing to perform relative rotation. Thus, the carrier and the case are cantilevered. Consequently, as compared with a case where the carrier and the case are supported in a center impeller manner, and where the bearings are interposed between the inner peripheries of the case, which are provided at both axially outer sides of the pinion, and the outer periphery of the case, the case is more likely to bend in a direction in which the radius of curvature thereof decreases. Consequently, the concentration of a meshing load can be more effectively constrained.

Further, the outside diameter of the bearing is set to be less than the diameter of the addendum circle of the internal teeth. Consequently, the thickness (radial thickness) of the case at the axial other side of the two pinions, more specifically, that of the axial other side end portion of the case can be increased. Accordingly, the support stiffness of this part is increased. Thus, the strength of the eccentric oscillating type speed reducer is increased. Furthermore, the aforementioned carrier is configured to have a pair of end plates disposed at both axially outer sides of the pinion and to have also bolts that fasten the end plates by being inserted into both end plates from axial one side to the axial other side. Thus, the assembly of the carrier can be facilitated. Consequently, an eccentric oscillating type speed reducer, which can easily be assembled, is implemented. Moreover, an attaching flange, to which the drive motor is attached, is attached to the case. In addition, a first stabilizer element is fixed to the attaching flange. Thus, the first stabilizer element is fixed to the case via the attaching flange. Consequently, a drive motor can easily be attached to the attaching flange. Accordingly, the drive motor can easily be incorporated into the rotation apparatus for the stabilizer shaft.

### Brief Description of the Drawings

[FIG. 1] FIG. 1 is a front cross-sectional view illustrating Embodiment 1 according to the present invention.
[FIG. 2] FIG. 2 is a cross-sectional view taken in the direction of arrows I-I shown in FIG. 1.
[FIG. 3] FIG. 3 is an enlarged cross-sectional view illustrating the vicinities of internally toothed gears and externally toothed gears.

### Best Mode for Carrying Out the Invention

### [Embodiment 1]

Hereinafter, Embodiment 1 if the present invention is described with reference to the accompanying drawings.

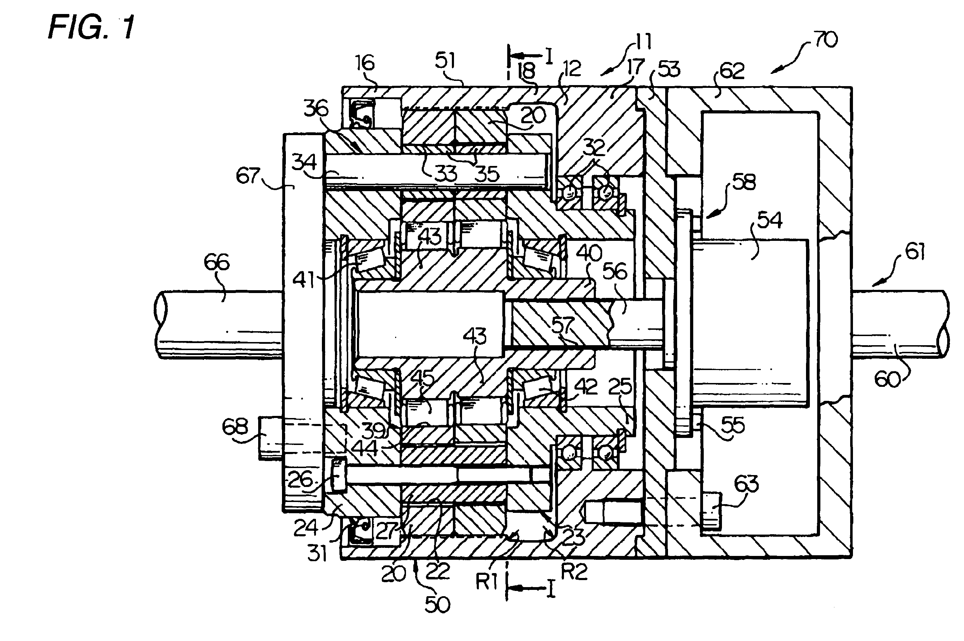

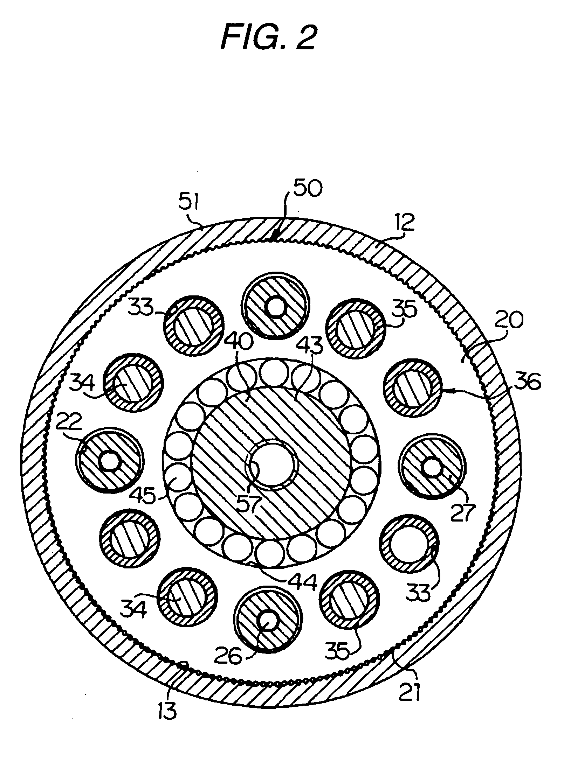

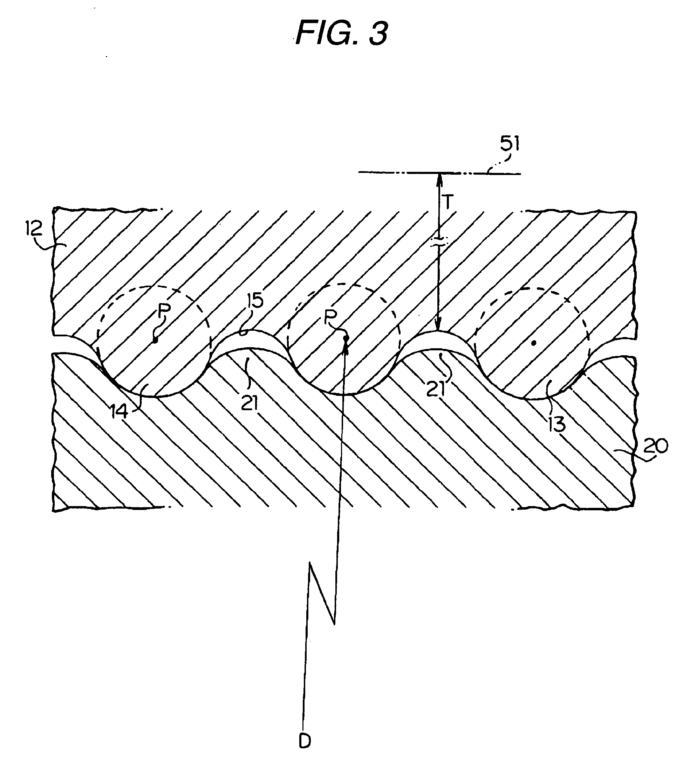

In FIGS. 1, 2, and 3, reference numeral 11 designates an eccentric oscillating type speed reducer that reduces an input rotation and outputs the reduced rotation. The eccentric oscillating type speed reducer 11 has a cylindrical case 12. A large number of internal teeth 13 whose tooth traces axially extend are formed integrally by, e.g., cutting using a hob or a shaping cutter or by, e.g., precision casting.

The internal teeth 13 are constituted by a large number of convex circular arc portions 14 which radially inwardly protrude and which have outer contours of a predetermined radius of curvature, and a large number of concave circular arc portions 15 each of which smoothly connects the adjacent concave circular arc portions 14 and which are radially outwardly dented. Consequently, the internal teeth 13 are constituted by teeth having a circular arc tooth profile. Incidentally, the expression "smoothly connect" means that two circular arc curves are connected to each other so that the adjacent circular arc curves have contact with each other, that is, the circular arc of the convex circular arc portion 14 and the circular arc of the concave circular arc portion 15 are connected to each other so as to have one common point and as to share one tangential line in common at this common point.

In the case 12, a plurality of (two in the present embodiment) ring-like pinions 20 are axially arranged and accommodated. Outer teeth 21 constituted by a large number of teeth of a trochoidal tooth profile, more specifically, an epitrochoidal tooth profile are formed on the outer peripheries of these pinions 20. Incidentally, the number of the external teeth 21 of the pinions 20 is less than that of the internal teeth 13 by one or two, more specifically, only by one in the present embodiment. Further, the external teeth 21 mesh with the internal teeth 13 in a state in which these pinions 20 are inscribed in the case 12. However, the maximum meshing portions (parts at which the depth of meshing is the largest) of the two pinions 20 are shifted in phase by 180 degrees with each other. Incidentally, in a case where the internal teeth 13 are formed integrally with the case 12 as described above, the internal teeth 13 and the external teeth 21 come into slide-contact with each other. Thus, sometimes, the internal teeth 13 and the external teeth 21 are early worn away. Accordingly, the hardness of surfaces of the internal teeth 13 and the external teeth 21 are made to be high by applying ion-nitriding thereon. Further, each component of the eccentric oscillating type speed reducer 11 is made of metal. More specifically, the case 12 and the pinions 20 use structural alloys, such as carbon steels for machine structural use and chrome molybdenum high-strength steels.

Incidentally, the range of meshing in the circumferential direction between the external teeth 21 and the internal teeth 13 (range where the external teeth 21 and the internal teeth 13 mesh and transmit torque) varies from 45 degrees to 180 degrees, preferably, from 80 degrees to 100 degrees. Further, preferably, the radius of curvature of the circular arc tooth file of the internal teeth 13 (the convex circular arc portions 14) ranges from 0.2 mm to 0.5 mm. The reasons are as follows. The machining and the finishing of the internal teeth 13 are very difficult in a case where the radius of curvature of the internal teeth 13 is less than 0.2 mm. On the other hand, in a case where the radius of curvature thereof exceeds 0.5 mm, the Hertzian stress in the surfaces of the teeth increases, so that the peeling of the surfaces of the internal teeth 13 and the external teeth 21are liable to occur. Also, it becomes difficult to set the number of the internal teeth 13 to be equal to or more than 120 without increasing the pitch diameter of each of the external teeth 21 and the diameter of a circle connecting the centers of the circular arcs of the internal teeth 13. Consequently, a large speed reduction ratio cannot easily be obtained.

In each of the aforementioned pinions 20, a plurality of (four in the present embodiment) through holes 22, which axially penetrate therethrough, are formed. Theses through holes 22 are arranged at uniform intervals in the circumferential direction of each of the pinions 20. Reference numeral 23 designates a carrier inserted into the case 12. This carrier 23 has a pair of end plates 24 and 25 disposed at both axially outer sides of the two pinions 20, in the present embodiment, one side disk-like end plate 24 placed on one axial side of the two pinions 20, and the other side end plate 25 placed on the other axial side thereof, and a plurality of bolts 26 (the number of which is equal to that of the through holes 22) that fasten both the end plates 24 and 25 to each other by inserting the plurality of bolts 26 into both the end plates 24 and 25 from one axial side to the other axial side and by screwing the other axial side portions thereof into the other side end plate 25.

Further, the carrier 23 has a plurality of, more specifically, in the present embodiment, four cylindrical column members 27 extending axially. These column members 27 are loosely fit into the through holes 22, respectively. The bolts 26 pass through in the column members 27, respectively. Each of the column members 27 is sandwiched by the one side end plate 24 and the other side end plate 25 from both axial sides by screwing the bolts 26 into the other side end plate 25. The axial length of each of the column members 27 is slightly longer than a total thickness of the two pinions 20. Incidentally, although the column members 27 are formed separately from both the end plates 24 and 25, the column members can be formed integrally with the one side end plate or with the other side end plate according to the present invention.

Reference numeral 31 designates an oil seal serving as a seal member interposed between the inner periphery of the case 12 on axial one side of the two pinions 20 and the outer periphery of the carrier 23, more particularly, between the inner periphery of the axial one side end portion 16 of the case 12 and the outer periphery of the one side end plate 24. This oil seal 31 seals between the case 12 and the carrier 23 and prevents a lubricant agent or the like from leaking out from therebetween and prevents also dust, dirt or the like from entering the case 12. Reference numeral 32 denotes a couple of bearings interposed only between the inner periphery of the case 12 on the axial other side of the two pinions 20 and the outer periphery of the carrier 23, more particularly, only between the inner periphery of the axial other side end portion 17 of the case 12 and the outer periphery of the other side end plate 25. The couple of bearings are disposed by being slightly spaced from each other. These bearings 23 enable the case 12 and the carrier 23 to perform relative rotation.

Both the end plates 24 and 25, the bolts 26, and the column members 27, which have been described above, in their entirety are inserted into the case 12, and constitute the aforementioned carrier 23 capable of performing relative rotation with respect to the case 12. Further, in a case where the bearings 32 are interposed only between a part of the inner periphery of the case 12, which is provided at the axial other side of the two pinions 20, and the outer periphery of the carrier 23 in a portion between the inner periphery of the case 12 and the outer periphery of the carrier 23 as described above, the carrier 23 and the case 12 are cantilevered. Thus, as compared with a case where the carrier 23 and the case 12 are supported in a center impeller manner, and where the bearings 32 are interposed between the inner peripheries of the case 12, which are provided at both axially outer sides of the two pinion 20, and the outer periphery of the case 12, the case 12 is more likely to bend in a direction in which the radius of curvature thereof decreases. Consequently, the concentration of a meshing load can be more effectively constrained.

Further, the outside diameter of the bearings 32 is less than the diameter of the addendum circle of the internal teeth 13. Consequently, the thickness (radial thickness) of the case 12 at the axial other side of the two pinions 20, more specifically, that of the axial other side end portion 17 of the case 12 can be increased. Accordingly, a thick wall part, whose inside diameter is less than the diameter of the addendum circle of the internal teeth 13, is formed in the axial other side end portion 17 of the case 12. The support stiffness of this part (part abutting against the bearings 32 of the case 12) is increased. Thus, the strength of the eccentric oscillating type speed reducer 11 is increased.

Then, in a case where the bolts 26 are inserted into both the end plates 24 ad 25 from axially one side to the axially other side, as described above, the bolts 26 are less subjected to interference from the bearings 32 which are relatively small in diameter. Thus, as compared with a case where the bolts 26 are inserted into both the end plates 24 and 25 from the axial other side to the axial one side, the assembly of the carrier 23 is easily achieved. Consequently, the manufacturing cost of the eccentric oscillating type speed reducer 11 can be reduced.

Reference numeral 33 designates a plurality of (eight in the present embodiment, which is a number that is twice the number of the through holes 22) pin holes formed in each pinion 20, which extend axially. These pin holes 33 are arranged pair by pair (two by two) between each adjacent pair of the through holes 22 arranged in the circumferential direction of each pinion 20. Reference numeral 34 denotes pins the number of which is equal to that (eight) of the pin holes 33. An axially central portion of each of such a plurality of pins 34 is loosely fit into an associated one of the pin holes 33. On the other hand, both axial end portions of each of the pins 34 are supported by the carrier 23. More particularly, both axial end portions of each of the pins 34 are supported by and fixed to the carrier 23 by being press-fit into both the end plates 24 and 25, respectively.

Reference numeral 35 designates a ring rotatably fit onto the axially central portion of each pin 34 so that the number of the rings is equal to the number (two) of the pinions 20. The inside diameter of these rings 35 is substantially equal to the outside diameter of each pin 34. Thus, the inner periphery of the ring 35 comes into slide-contact with the outer periphery of the pin 34. Further, the outside diameter of the ring 35 is less than the inside diameter of the pin hole 33 by an amount which is twice the eccentricity amount of an eccentric portion 43 of a crank shaft 40, which will be described below. The outer periphery of the ring 35 is in rolling contact with the inner periphery of the pin hole 33. Consequently, the pinions 20 are eccentrically rotatably supported by the carrier 23 via the pins 34 and the rings 35.

Incidentally, each set of the aforementioned pin 34 and the aforementioned ring 35 in their entirety is configured so as to be inserted into an associated one of the pin holes 33 by engaging the central part thereof with the associated one of the pin holes 33, as to have both end portions thereof, which are supported by the carrier 23, and as to constitute an engaging pin 36 which performs relative rotation with respect to each pinion 20. Incidentally, according to the present invention, in addition to the constituting of each engaging pin by integrating each pin and the associated ring with each other, both axial end portions of each engaging pin can be configured to be rotatably supported by both the end plates, respectively. Alternatively, each engaging pin can be constituted a pin with an eccentric portion by omitting the rings. In addition, both axial end portions of each engaging pin can be configured to be rotatably supported by both the end plates so that the outer periphery of the eccentric portion is brought into slide or rolling contact with the pinions (pin holes).

Reference numeral 40 designates one hollow crank shaft, which is loosely fit into a crank shaft hole 39 formed on the central axis of the carrier 23 and extends axially. This crank shaft 40 is such that both end portions thereof are supported by the end plates. More particularly, one end portion of the crank shaft 40 is rotatably supported by the one side end plate 24 via a bearing 41, while the other end portion thereof is rotatably supported by the other side end plate 25 via a bearing 42. Further, this crank shaft 40 has two decentered eccentric portions 43 at the central portion thereof. These eccentric portions 43 are arranged at axial positions so as to overlap with the pinion 20. Moreover, these eccentric portions 43 are shifted in phase only by 180 degrees. Additionally, the eccentric portions 43 are inserted into a crank hole 44 formed in central portions of the pinions 20 so as to penetrate axially therethrough in a state in which a cylindrical roller bearing 45 is interposed therebetween. Further, when the crank shaft 40 rotates, the pinions 20 eccentrically rotate.

Incidentally, preferably, the outside diameter of the cylindrical roller bearing 45 is set to be within a range of 30 % to 65 % of the diameter D of a circle connecting the centers of the circular arcs of the internal teeth 13 of the case 12, more particularly, the diameter D of a circle connecting the centers of curvature (the centers of circular arcs) P of the convex circular arc portions 14. The reasons are as follows. In a case where the outside diameter of the cylindrical roller bearing 45 is less than 30 % of the diameter D, the load capability of the cylindrical roller bearing 45 is reduced, so that transmitted torque is reduced. On the other hand, in a case where the outside diameter of the cylindrical roller bearing 45 exceeds 65 % of the diameter D, the diameter of the pins 34 is reduced. Alternatively, the radially thickness of a part of each of the pinions 20, in which the pins 34 are inserted, is reduced. Thus, similarly, there is a fear of reduction in the transmitted torque. However, in a case where the outside diameter of the cylindrical roller bearing 45 is set to be within the aforementioned range, such effects are balanced. Consequently, the transmitted torque can have a large value. Furthermore, it is more preferable that the outside diameter of the cylindrical roller bearing 45 is set to be within a range of 40 % to 60 % of the diameter D. This is because the aforementioned advantages can be surely obtained.

Further, when drive rotation is input to the crank shaft 40, the crank shaft 40 rotates around the axis of rotation thereof. Consequently, the eccentric portion 43 of the crank shaft 40 rotates in the crank hole 44 of each of the pinions 20. The pinions 20 perform eccentric oscillating rotations. At that time, the number of the external teeth 21 of the pinion 20 is less than that of the internal teeth 13 of the case 12 only by one. Thus, the speed of the relative rotation between the case 12 and the carrier 23 is considerably reduced, so that the case 12 and the carrier 23 perform relative rotation at low speed. The case 12, the pinions 20, the carrier 23, and the crank shaft 40 in their entirety, which have been described, constitute the eccentric oscillating type speed reducer 11 capable of reducing input rotation at a high ratio.

Incidentally, in a case where the machining accuracy of at least one of a set of the internal teeth 13 of the case 12 and a set of the external teeth 21 of the pinions 20 is low in the aforementioned eccentric oscillating type speed reducer 11, and where polishing processing for eliminating a heat treatment distortion is omitted, a large meshing load is concentrated on the vicinity of a part, at which the manner of meshing between the internal teeth 13 and the external teeth 21 differs largely from an ideal manner, in a meshing region 50 in which the internal teeth 13 mesh with the external teeth 21, while torque is transmitted therebetween.

Thus, in the present embodiment, a part of the case 12, which is in the meshing region 50 in which the internal teeth 13 and the external teeth 21 of the pinion 20, is made to be thin, as compared with the thickness of the conventional case, and is thus enabled to bend in a direction in which the radius of curvature thereof is reduced. Consequently, during a rated torque is transmitted, when the concentration of a large meshing load on the vicinity of a part, at which the manner of meshing between the internal teeth 13 and the external teeth 21 differs largely from an ideal manner, is caused by the eccentric rotation of each of the pinions 20 in the meshing region 50, a portion of the case 12, which is in the vicinity of this part, bends in a direction in which the radius of curvature thereof is reduced (consequently, this portion swells radially outwardly). Accordingly, the meshing load is uniformized by being dispersed in the circumferential direction of the case 12.

As a result, the manufacturing cost of the eccentric oscillating type speed reducer 11 can be reduced while torque transmitting capability is restrained from being reduced. Further, in the present embodiment, the internal teeth 13 are constituted by teeth having a circular arc tooth profile, as described above. In addition, the external teeth 21 are constituted by teeth having a trochoidal tooth profile. Thus, the concentration of the meshing load can be further mitigated. Also, the eccentric oscillating type speed reducer 11 can be manufactured at low cost. Incidentally, because the case 12 is configured to be able to flex (bend), as described above, it is preferable that the case 12 is made of a material whose hardness and toughness are higher than those of the pinions 20.

Further, in the present embodiment, in a case where a thickness from the bottom of each of the internal teeth 13 to the outer periphery 51 of the case 12 in the aforementioned meshing region 50is set at the minimum thickness T in the aforementioned meshing region 50, the meshing region 50 of the aforementioned case 12 is connected to the axial other side end portion 17 by a thin wall portion 18 whose thickness is less than the minimum thickness T. Consequently, the flexing (bending) of the case in the aforementioned meshing region 50 is further facilitated. Furthermore, in order to mitigate the concentration of stress, a circular arc portion (R) R1 having a predetermined radius of curvature R1 is formed on the border between the meshing region 50 and the thin wall portion 18, while a circular arc portion R2 having a predetermined radius of curvature R2 is formed on the border between the thin wall portion 18 and the axial other side end portion 17. Incidentally, the difference in thickness between both sides of the latter circular arc portion R2 is larger than that in thickness between both sides of the latter circular arc portion R1. Thus, the radius R2 of curvature of the latter circular arc portion is larger than that of curvature of the former circular arc portion.

Further, the former circular arc portion R1 is formed of the top portion of the inner tooth 13. Therefore, burrs are prevented from being produced when the internal teeth 13 are machined. Incidentally, the aforementioned circular arc portions R1 and R2 can be formed by combining a plurality of circular arcs that differ in radius of curvature from one another. Furthermore, in order to flex (bend) the case 12, as described above, in a case where the diameter D of a circle connecting the centers of curvature (the centers of circular arcs) P of the convex circular arc portions 41 exceeds 60 mm and is equal to or less than 100 mm, it is sufficient to set the minimum thickness T to be within the range of 3 % to 8 % of the diameter D, preferably, 3 % to 5 % of the diameter D.

Moreover, in a case where the aforementioned diameter D exceeds 100 mm and is equal to or less than 200 mm, it is sufficient to set the aforementioned minimum thickness T to be within the range of 3 % to 7 % of the aforementioned diameter D, preferably, 4 % to 6 % of the diameter D. Additionally, in a case where the aforementioned diameter D exceeds 200 mm and is equal to or less than 300 mm, it is sufficient to set the aforementioned minimum thickness T to be within the range of 2 % to 6 % of the aforementioned diameter D, preferably, 3 % to 5 % of the diameter D. Further, in a case where the aforementioned diameter D exceeds 300 mm and is equal to or less than 400 mm, it is sufficient to set the aforementioned minimum thickness T to be within the range of 1 % to 5 % of the aforementioned diameter D, preferably, 2 % to 4 % of the diameter D. Thus, as described above, the case 12 can be bent, and the meshing can be uniformized.

An example of the aforementioned eccentric oscillating type speed reducer 11 is described hereinbelow. The outside diameter of the case 12 was 102.00 mm. Both of the diameter D of a circle connecting the centers P of the circular arcs of the internal teeth 13 and the diameter of a pitch circle of the external teeth 21 of each pinion 20 were 95.0 mm. The diameter of the addendum circle of the internal teeth 13 was 94.10 mm. The diameter of the root circle of the internal teeth 13 was 95.151 mm. The diameter of the addendum circle and that of the root circle of each pinion 20 were 94.48 mm and 93.72 mm, respectively. The radius of curvature of the circular arc tooth profile of the internal teeth 13 was 0.45 mm. The pitch of the internal teeth 13 was 1.50 mm. The minimum thickness T of the case 12 in the meshing region 50 is 3.425 mm (3.60 % of the diameter D). The number of the internal teeth 13 was 200. The number of the external teeth 14 was 199. Further, in a case where a rated torque was given to such an eccentric oscillating type speed reducer 11, an amount of swelling radially outwardly was 20µm when a part of the case 12, which was in the meshing region 50, bent.

Reference numeral 53 is a substantially disk-like attaching flange, which is attached to the other side surface (the other side surface of the thick wall portion of the case 12) by being positioned with high precision by smooth fitting. A drive motor 45 is attached to the radially central portion of the other side surface of this attaching flange 53 with bolts 55. Consequently, this drive motor 54 is coaxially configured with the crank shaft 40. An end portion of the rotating shaft 56 of this drive motor 54 is inserted into and spline-connected to a hollow hole 57 of the crank shaft 40. Thus, the rotating shaft 56 of this drive motor 54 is connected (directly connected in the present embodiment) to the other end portion of the crank shaft 40. Consequently, when the drive motor 54 operates, so that a torque is given to the crank shaft 40 from the rotating shaft 56, the crank shaft 40 rotates around the axis of rotation thereof.

Incidentally, the aforementioned eccentric oscillating type speed reducer 11 and the drive motor 54 in their entirety constitute a rotation apparatus 58 for a stabilizer shaft 61, which positively gives a torque to the stabilizer shaft 61 against twist caused in the stabilizer shaft 61 (to be described below) based on roll. Reference numeral 60 designates a first stabilizer element which constitutes one side portion of the stabilizer shaft 61 provided in a vehicle in order to remain balance of a vehicle (an automobile, a railway vehicle, or the like), and which is coaxial with the central axis of the aforementioned eccentric oscillating type speed reducer 11. The other end of this first stabilizer element 60 is connected to an arm (not shown) attached to a wheel (right wheel in the present embodiment).

On the other hand, a bottomed cylindrical cover portion 62, which moves in concert with the attaching flange 53 and surrounds the drive motor 54, is formed at one end of the first stabilizer element 60 integrally therewith. This cover portion 62 is positioned at a radially outer end portion of the other side surface of the attaching flange 53 by smooth fitting. The cover portion 62 is fixed by being fastened together with the attaching flange 53 and the case 12 by a bolt 63, one end of which extends into the thick wall portion of the case 12. Consequently, the first stabilizer element 60 is fixed to the case 12 via the attaching flange 53. Thus, the drive motor 54 can easily be attached to the attaching flange 53. Consequently, the drive motor 54 can easily be incorporated into the rotation apparatus 58 for the stabilizer shaft.

Reference numeral 66 designates a second stabilizer element, which constitutes the remaining one side of the aforementioned stabilizer shaft 61 and is coaxial with the central axis of the aforementioned eccentric oscillating type speed reducer 11. One end of the second stabilizer element 66 is fixed to an arm (not shown) attached to a wheel (left wheel in the present embodiment). On the other hand, a disk-like portion 67 for closing one end opening of a crank shaft hole 39 is formed at the other end of the second stabilizer element 66 integrally therewith. The disk-like portion 67 is fixed to one side surface of the carrier 23 with a plurality of bolts 68. The positioning of these components is performed by faucet connecting, by which the outer peripheral surface of a faucet portion formed on the central portion of the other side surface of the aforementioned disk-like portion 67 is brought into surface contact with the crank shaft hole 39. Incidentally, the axially central portion of each of the first stabilizer element 60 and the second stabilizer element 66 is rotatably attached to a vehicle via a bearing (not shown).

Incidentally, in a case where the eccentric oscillating type speed reducer 11 is used in a limited space, such as the rotation apparatus 58 for the stabilizer shaft, the outside diameter of the eccentric oscillating type speed reducer 11 is a fairly small diameter. Thus, the polishing processing of the internal teeth 13 and the external teeth 21 is difficult to perform. However, in the present embodiment, a part of the case 12, which is in the meshing region 50, can be bent in a direction in which the radius of curvature thereof is decreased. Accordingly, upon completion of performing hardening treatment, such as heat treatment processing, on the teeth portions, the meshing load is dispersed in the circumferential direction of the case 12 and is uniformized when the pinions 20 rotate, even without performing polishing processing thereon. Thus, the aforementioned eccentric oscillating type speed reducer 11 can be particularly suitably used in the rotation apparatus 58 for the stabilizer shaft.

Incidentally, the rotation apparatus 58 and the stabilizer shaft 61 in their entirety are attached to a vehicle (not shown) and constitute an active stabilizer apparatus 70 capable of positively giving a counterbalancing force against roll, which is generated in the vehicle mainly at the time of turning driving thereof, to the stabilizer shaft to restrain the left and right wheels from moving in vertically opposite phases. Additionally, such an active stabilizer apparatus 70 can be mounted in one or both of front or rear portions of a vehicle.

Next, an operation of the aforementioned Embodiment 1 is described below.
When a vehicle, to which the active stabilizer apparatus 70 is attached, is caused to perform turning-driving, roll is generated in a vehicle. At that time, the drive motor 54 is operated on the basis of, for example, lateral G detected by a sensor (not shown), or the like. When a torque is given to the crank shaft 40 from the rotating shaft 56 by operating the drive motor 54, the crank shaft 40 rotates around the axis of rotation thereof. Consequently, the eccentric portion 43 of the crank shaft 40 rotates in the crank hole 44 of each pinion 20 to cause the pinions 20 to perform eccentrically oscillating rotations. However, the number of the external teeth 21 of the pinion 20 is less than that of the internal teeth 13 of the case 12 only by one. Thus, the speed of the relative rotation between the case 12 and the carrier 23 is considerably reduced, so that a rotation of the crank shaft 40 is transmitted to at least one (both in the present embodiment) of the case 12 and the carrier 23. consequently, the case 12 and the carrier 23 are caused to perform relative rotation (reverse rotation) at low speed.

Accordingly, the first stabilizer element 60 fixed to the case 12, and the second stabilizer element 66 fixed to the carrier 23 relatively reverse rotation at low speed. As a result, a counterbalancing torque against twist generated in the stabilizer shaft 61 based on roll is given to the stabilizer shaft 61. Thus, the generation of roll is effectively prevented. A vehicle, which is turning-driving, is held in a balanced condition.

Incidentally, as described above, a large number of internal teeth 13 are integrally formed on the inner periphery of the case 12. In addition, a part of the case 12, which is in the meshing region 50 in which the aforementioned internal teeth 13 and the external teeth 21 of the pinions 20 mesh, is enabled to bend in a direction in which the radius of curvature decreases. Thus, even when the concentration of a large meshing load on the vicinity of a part, at which the manner of meshing between the internal teeth 13 and the external teeth 21 differs largely from an ideal manner, is caused by the eccentric rotation of each of the pinions 20 in the meshing region 50, a portion of the case 12, which is in the vicinity of this part, bends in a direction in which the radius of curvature thereof is reduced (consequently, this portion swells radially outwardly). Accordingly, the aforementioned meshing load is uniformized by being dispersed in the circumferential direction of the case 12. Consequently, the manufacturing cost of the eccentric oscillating type speed reducer 11 can be reduced while torque transmitting capability is restrained from being reduced.

Further, in a case where the eccentric oscillating type speed reducer 11 is used in a limited space, particularly, in the aforementioned rotation apparatus 58 for the stabilizer shaft, the finish polishing processing of the internal teeth 13 and the external teeth 21 is difficult to perform. However, the eccentric oscillating type speed reducer 11 is such that a part of the case 12, which is in the meshing region 50, can bend in a direction in which the radius of curvature decreases. Thus, the meshing load is uniformized by being dispersed in the circumferential direction of the case 12, even without performing polishing processing on the internal teeth 13 and the external teeth 21.

Incidentally, in the aforementioned embodiment, the single crank shaft 40 is disposed on the central axis of the eccentric oscillating type speed reducer 11. However, according to the present invention, a plurality of crank shafts can be disposed at a uniform distance from the central axis of the eccentric oscillating type speed reducer 11 and at uniform angular intervals, instead of the crank shaft 40. At that time, the pinions are supported by the carrier via the plurality of crank shafts.

Further, in the aforementioned embodiment, both the case 12 and the carrier 23 are rotated. However, according to the present invention, the case 12 and the carrier 23 can be configured so that one of the case 12 and the carrier 23 is fixed, while the remaining one of the case 12 and the carrier 23 is rotated. Furthermore, in the aforementioned embodiment, the internal teeth 13 and the external teeth 21 with low machining accuracy are used. However, according to the present invention, teeth with low machining accuracy can be used as one of a set of the internal teeth 13 and a set of the external teeth 21. Alternatively, teeth with high machining accuracy can be used as both the set of the internal teeth 13 and the set of the external teeth 21.

### Industrial Applicability

The present invention can be applied to an industrial field of an eccentric oscillating type speed reducer configured to reduce a speed by causing pinions to perform eccentric rotations using a crank shaft.

## Claims

1. An eccentric oscillating type speed reducer comprising: a case with the inner periphery of which a large number of internal teeth are formed integrally, a carrier capable of performing relative rotation with respect to said case, a pinion supported by said carrier and configured so that external teeth meshing with said internal teeth are formed on an outer periphery thereof, and a crank shaft which has an eccentric portion inserted into said pinion and which rotates to cause said pinion to perform eccentric rotation, wherein a part of said case, which is in a meshing region in which said internal teeth mesh with said external teeth, is enabled to bend in a direction in which a radius of curvature thereof decreases.

2. The eccentric oscillating type speed reducer according to claim 1, wherein said internal teeth are constituted by teeth having a circular arc tooth profile, and where said external teeth are constituted by teeth having a trochoidal tooth profile.

3. The eccentric oscillating type speed reducer according to claim 1, wherein a seal member is interposed between the inner periphery of said case on axial one side of said pinion and the outer periphery of said carrier, wherein a bearing is interposed only between the inner periphery of said case on the axial other side of said pinion and the outer periphery of said carrier, and wherein said bearing causes said case and said carrier to perform relative rotation.

4. The eccentric oscillating type speed reducer according to claim 3, wherein an outside diameter of said bearing is set to be less than a diameter of an addendum circle of said internal teeth.

5. The eccentric oscillating type speed reducer according to claim 4, further comprising a pair of end plates respectively disposed on both axial outer sides of said pinion, and bolts which fasten said end plates to each other by being inserted into both of said end plates from one axially side to the axially other side.

6. A rotation apparatus for a stabilizer shaft using an eccentric oscillating type speed reducer, comprising said eccentric oscillating type speed reducer according to claim 1, and a drive motor configured to give a torque to a crank shaft of said eccentric oscillating type speed reducer, and **characterized in that** a first stabilizer element constituting one side of a stabilizer shaft is fixed to said case of said speed reducer, while a second stabilizer element constituting the remaining one side of said stabilizer shaft is fixed to said carrier of said speed reducer.

7. The rotation apparatus for a stabilizer shaft according to claim 6, wherein an attaching flange, to which said drive motor is attached, is attached to said case, and wherein said first stabilizer element is fixed to said case via said attaching flange by fixing said first stabilizer element to said attaching flange.
